# EUROPEAN PATENT APPLICATION

(11) **EP 4 243 112 A1**
(43) Date of publication of application: **13.09.2023**
(21) Application number: 21903317.2
(22) Date of filing: 03.12.2021
(51) Int. Cl.: H01M 4/13, H01M 4/525, H01M 4/58, H01M 10/0562, H01M 10/058, H01M 10/54

(54) **SOLID-STATE SECONDARY BATTERY**

(30) Priority: 08.12.2020 JP 2020203467
(71) Applicant: CANON KABUSHIKI KAISHA, Tokyo 146-8501 (JP)
(72) Inventor: TANIUCHI, Hiroshi, Tokyo 146-8501 (JP); KUBO, Kenta, Tokyo 146-8501 (JP); USAMI, Hirokazu, Tokyo 146-8501 (JP); AOTANI, Takaharu, Tokyo 146-8501 (JP)
(74) Representative: WESER & Kollegen Patentanwälte PartmbB
(86) International application number: PCT/JP2021/044396
(87) International publication number: WO 2022/124213

(57) **Abstract**

A solid-state secondary battery includes an active material layer having a plurality of active material particles in a layer thickness direction, an electrolyte layer that performs transfer of active material ions with the active material particles, and a current collector layer that performs transfer of electrons with the active material particles. The active material layer has, in the layer thickness direction, a first region where a specific surface area of the active material particles is lower than that in another region in the layer thickness direction.

## Description

### Technical Field

The present invention relates to a solid-state secondary battery.

### Background Art

In general, a secondary battery is composed of electrodes (an anode and a cathode) and an electrolyte and performs charging and discharging as a result of the movement of ions between the electrodes through the electrolyte. Such a secondary battery is used in various applications from small devices such as mobile phones to large devices such as electric vehicles. Therefore, further improvement in the performance of the secondary battery has been desired. To enhance charge-discharge characteristics of the secondary battery, in general, it is important to increase an interface between an active material in the electrode and the electrolyte. Herein, the "active material" refers to a substance involved in a reaction that generates electricity.

To enhance charge-discharge characteristics, a technique of using an active material having fine projecting portions as an anode of a solid-state secondary battery is known as a specific measure. Japanese Patent Laid-Open No. 2015-220080 discloses a technique of providing, on a current collector, a lithium cobalt oxide pattern having a specific surface area increased by a factor of 1.1 to 2 by a flux method in which a plating layer containing cobalt and an active material raw material containing lithium are heated while being in contact with each other.

Meanwhile, when a secondary battery is disposed of, for example, at the end of the lifetime of the secondary battery or an electrical appliance on which the secondary battery is mounted, it is desirable to increase the rate of resource recovery and to easily perform separation of each material in view of environmental conservation. Japanese Patent Laid-Open No. 2020-129157 discloses that, in order to ensure detachability between an active material layer and a current collector layer of a solid-state secondary battery (all-solid-state battery), a pressure-sensitive adhesive having plasticity at room temperature is provided between the active material layer and the current collector layer. The pressure-sensitive adhesive described in Japanese Patent Laid-Open No. 2020-129157 is provided in a portion, such as four corners, of the gap between the active material layer and the current collector layer during assembly, and, in the remaining portion, that is, the portion where the pressure-sensitive adhesive is not provided, the active material layer and the current collector layer are disposed so as to be in close contact with each other by pressure bonding in a cell assembly process. It is disclosed that conductivity between the two layers, i.e., the active material layer and the current collector layer after cell assembly is ensured, and the two layers can be easily separated, as needed.

Japanese Patent Laid-Open No. 2020-129157 further discloses that, by disposing of only the active material layer and current collector layer related to a region specified as having a defect caused by short-circuit or the like, components that can be used in the all-solid-state battery are left again to improve the yield of the components.

### Citation List

### Patent Literature

PTL 1: Japanese Patent Laid-Open No. 2015-220080
PTL 2: Japanese Patent Laid-Open No. 2020-129157

### Summary of Invention

### Technical Problem

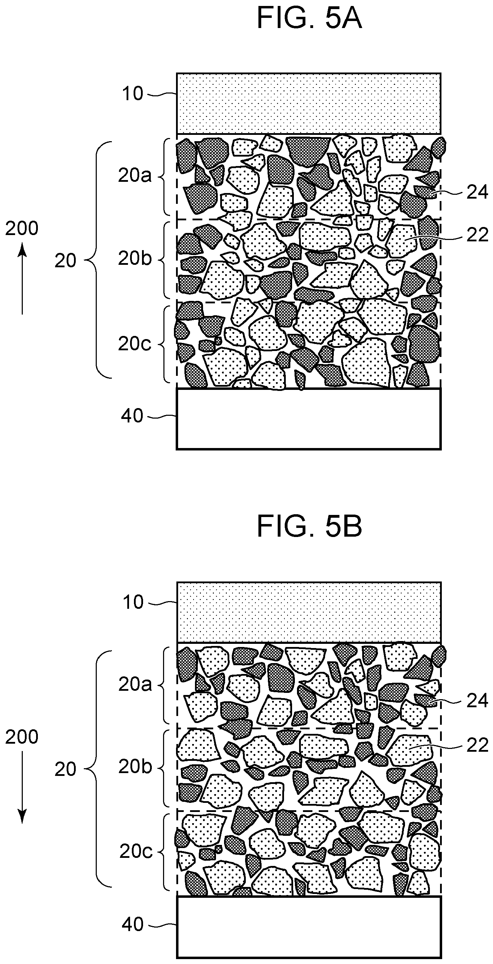

An all-solid-state battery (solid-state secondary battery) produced by using an active material layer containing active material particles having projecting portions and obtained by the method disclosed in Japanese Patent Laid-Open No. 2015-220080 is concerned to have the following problem that makes recyclability difficult when subjected to resource recovery as treatment after disposal. This problem is that, between a solid electrolyte layer and the active material layer and between the active material layer and a current collector layer, an irregular separation may occur between different structural elements adjacent to each other in a layer direction, in which a portion of at least one of the elements remains on the other element as in Fig. 5. It was presumed that such an irregular separation was caused by an anchoring effect due to a plurality of projecting portions provided in order to ensure ion conductivity between adjacent particles and between adjacent layers.

As a result of studies conducted by the inventors of this application, it was anticipated that the phenomenon of this irregular separation is likely to propagate and significantly occurs in a plurality of directions in a region where a stress is concentrated between materials having close physical properties related to deformation such as elastic-plastic deformation. Since the irregular separation occurs at a solid-solid interface more significantly than at a solid-liquid interface in terms of structure, it is desirable to provide a solid-state secondary battery in which the problem of the irregular separation is unlikely to occur.

It is also desirable to provide a solid-state secondary battery having enhanced separability at an interface between an active material layer and an electrolyte layer containing materials such as Li and Co having a high resource value and desired to have a high rate of recovery, at which the irregular separation is more likely to occur than at an interface between an active material layer and a current collector layer for which a relatively soft material can be selected.

An object of this application is to provide a solid-state secondary battery in which detachability between an active material layer and a current collector layer and between an active material layer and a current collector layer is ensured and which includes an active material layer whose recyclability is ensured.

A solid-state secondary battery according to an embodiment of the present invention includes an active material layer in which a plurality of active material particles are deposited in a layer thickness direction, the active material particles having a particle portion and a plurality of projecting portions that project from the particle portion in a plurality of directions; an electrolyte layer that performs transfer of active material ions with the active material particles; and a current collector layer that performs transfer of electrons with the active material particles, in which the active material layer has, in the layer thickness direction, a first region where a specific surface area of the active material particles is lower than that in another region in the layer thickness direction.

### Brief Description of Drawings

[Fig. 1A] Fig. 1A is a schematic sectional view of a solid-state secondary battery according to a first embodiment.
[Fig. 1B] Fig. 1B is a partial enlarged view including an anode active material layer of the solid-state secondary battery according to the first embodiment.
[Fig. 1C] Fig. 1C illustrates a layer-thickness-direction distribution of a specific surface area of anode active material particles of the solid-state secondary battery according to the first embodiment.
[Fig. 1D] Fig. 1D includes schematic views of an outline and a section of the solid-state secondary battery according to the first embodiment.
[Fig. 2A] Fig. 2A is a flowchart illustrating a method for producing a solid-state secondary battery according to the first embodiment.
[Fig. 2B] Fig. 2B is a flowchart relating to a method for producing a solid-state secondary battery according to a modification.
[Fig. 2C] Fig. 2C is a flowchart relating to a method for producing a solid-state secondary battery according to a modification.
[Fig. 3A] Fig. 3A is a flowchart illustrating a method for producing an anode active material layer according to the first embodiment.
[Fig. 3B] Fig. 3B is a flowchart illustrating a method for producing an anode active material layer according to a modification.
[Fig. 4A] Fig. 4A is a layer-thickness-direction profile of a specific surface area of an anode active material layer according to a second embodiment.
[Fig. 4B] Fig. 4B is a layer-thickness-direction profile of a specific surface area of an anode active material layer according to a third embodiment.
[Fig. 4C] Fig. 4C is a layer-thickness-direction profile of a specific surface area of an anode active material layer according to a fourth embodiment.
[Fig. 5A] Fig. 5A is a partial enlarged view including an anode active material layer according to a fifth embodiment.
[Fig. 5B] Fig. 5B is a partial enlarged view including an anode active material layer according to a sixth embodiment.
[Fig. 6A] Fig. 6A is a view illustrating a holding form of a specimen of a shear test.
[Fig. 6B] Fig. 6B is a view illustrating a holding form of a specimen of a uniaxial tensile test.
[Fig. 6C] Fig. 6C is a view illustrating a holding form of a specimen of a shear test.
[Fig. 7A] Fig. 7A is a layer-thickness-direction profile of a specific surface area of anode active material particles according to a first reference mode.
[Fig. 7B] Fig. 7B is a layer-thickness-direction profile of a specific surface area of anode active material particles according to a second reference mode.
[Fig. 8A] Fig. 8A is a view illustrating a specimen after a shear stress test of a solid-state secondary battery according to the first embodiment.
[Fig. 8B] Fig. 8B is a view illustrating a specimen after a shear stress test of a solid-state secondary battery according to the first reference mode.

### Description of Embodiments

Hereinafter, preferred embodiments of the present invention will be described in detail with reference to the drawings. The dimensions, materials, shapes, relative positions, and the like of components described in the embodiments are not intended to limit the scope of the present invention.

### <First Embodiment>

### (Structures of Secondary Battery and Anode Active Material Layer)

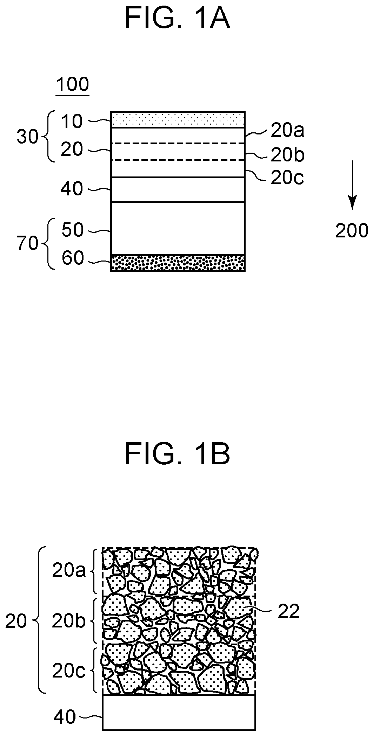

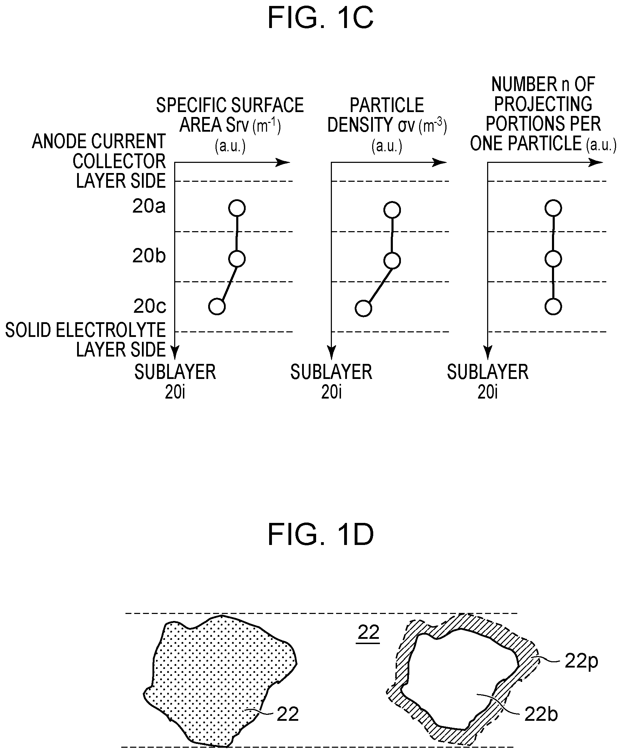

A solid-state secondary battery 100 including an anode current collector layer 10, an anode active material layer 20, and a solid electrolyte layer 40 according to a first embodiment will be described with reference to Figs. 1A to 1D. Fig. 1 includes a schematic sectional view of a solid-state secondary battery according to the first embodiment (Fig. 1A), a partial enlarged view including an anode active material layer (Fig. 1B), a layer-thickness-direction profile of a specific surface area of anode active material particles (Fig. 1C), and schematic views of an outline and a section of a particle (Fig. 1D).

Fig. 1A is a schematic sectional view of the solid-state secondary battery 100 to which the anode active material layer 20 of this embodiment is applied. The solid-state secondary battery 100 includes the solid electrolyte layer 40 on an opposite-side surface of the anode active material layer 20 from the anode current collector layer 10 in contact with the anode active material layer 20. The solid-state secondary battery 100 includes a cathode 70 at an opposite side of the electrolyte layer 40 from the side in contact with the active material layer 20. The cathode 70 includes a cathode active material layer 50 on a surface of the solid electrolyte layer 40 opposite from the surface in contact with the anode active material layer 20. The cathode 70 includes a cathode current collector layer 60 on a surface of the cathode active material layer 50 opposite from the surface in contact with the solid electrolyte layer 40. In other words, the solid-state secondary battery 100 includes the cathode 70, the solid electrolyte layer 40, and an anode 30 in a stacking direction 200.

Hereinafter, in the specification of this application, the anode current collector layer 10, the anode active material layer 20, the solid electrolyte layer 40, and an anode active material particle 22 may be alternatively referred to as a current collector layer 10, an active material layer 20, an electrolyte layer 40, and an active material particle 22, respectively, for the sake of simplicity. The "solid-state secondary battery" is used to mean a secondary battery in which at least an electrolyte includes a non-aqueous solid electrolyte, and may be alternatively referred to as a "secondary battery" or an "all-solid-state battery".

In the specification of this application, since electrode structures in which transfer of active material ions is performed with the solid electrolyte layer 40 are referred to as an anode and a cathode, the anode active material layer 20, which is obtained by omitting the anode current collector layer 10 from the anode 30 in Fig. 1A, may be referred to as an anode 30. Similarly, the cathode active material layer 50, which is obtained by omitting the cathode current collector layer 60 from the cathode 70 in Fig. 1A, may be referred to as a cathode 70.

The anode current collector layer 10 is a conductor that performs electron conduction between an external circuit not illustrated in the drawing and the active material layer. As the anode current collector layer 10, a freestanding film (foil) of a metal such as stainless (also referred to as SUS) or aluminum or a stacked form of the metal supported on a resin is used. As the cathode current collector layer 60, a freestanding film (foil) of a metal such as silver or copper or a stacked form of the metal supported on a resin is used.

The anode active material layer 20 includes anode active material layers 20a, 20b, and 20c as sublayers, as illustrated in Fig. 1B. The anode active material layers 20a, 20b, and 20c are distinguished from each other by a unit of stacking of the sublayers composed of deposited active material particles 22. The stacking direction 200 of the anode active material layers 20a, 20b, and 20c, which are the sublayers, is parallel to a layer thickness direction, and thus may be referred to as a layer thickness direction 200. As the anode active material layer 20, active material particles 22 containing an oxide-based solid electrolyte such as LiCoO₂ (lithium cobalt oxide: hereinafter also abbreviated as LCO) or CoLiO₄P (cobalt lithium phosphate) are applicable. Materials applicable to each layer will be described later. As illustrated in Fig. 1D, an anode active material particle 22 according to this embodiment has a particle portion 22b and projecting portions 22p that radially project in a plurality of directions on an outer surface of the particle portion 22b. In Fig. 1C, the particle portion 22b and the projecting portions 22p are omitted.

A specific surface area Srv (m⁻⁴) = S (m²)/V (m³) × σ (m⁻³) of the sublayers included in the anode active material layer 20 is controlled. By stacking the sublayers 20a, 20b, and 20c whose specific surface area is controlled, a distribution can be provided in the binding force between particles and the anchoring effect between the layers in the stacking direction 200. In the specification of this application, the specific surface area Srv is defined as a surface area per unit volume. The specific surface area of a sublayer 20i corresponds to the product of an average specific surface area per one particle Srp (m⁻¹) = S (m²)/V (m³), a number density σv (m⁻³) of particles per unit volume, and a volume V of one layer.

When the active material layer 20 does not have a significant distribution in the layer thickness direction in terms of the number density σv of particles per unit volume, an increment ΔSrv of the specific surface area Srv in the case of active material particles 22 having projecting portions 22p is proportional to the number n (dimensionless) of projecting portions 22p per one particle of the active material particles 22. Similarly, when the active material layer 20 does not have a significant distribution in the layer thickness direction in terms of the number of projecting portions 22p per one particle, an increment ΔSrv of the specific surface area Srv in the case of active material particles 22 having projecting portions 22p is proportional to the number density σv (m⁻³) of particles per unit volume. That is, an increment ΔSrv(i) of the specific surface area Srv(i) of a sublayer 20i of the active material layer 20 due to the presence of the projecting portions 22p is proportional to the product of the number density σv (m⁻³) of particles per unit volume and the number n (dimensionless) of projecting portions per one particle of the active material particles 22. Thus, in other words, the specific surface area Srv(i) of a sublayer 20(i) of the active material layer 20 due to the presence of the projecting portions 22p changes with a positive correlation to the product of the number density σv (m⁻³) of particles per unit volume and the number (dimensionless) of projecting portions per one particle of the active material particles 22.

In the layers constituting the solid-state secondary battery 100, the binding force between the anode active material layer 20 and the solid electrolyte layer 40 may be stronger than the binding force between layers of other structural elements in some cases in view of the affinity between materials and the correlation of structures. If the binding force between the anode active material layer 20 and the anode current collector layer 10 is stronger than the binding force between the anode active material layer 20 and the solid electrolyte layer 40, the solid electrolyte layer 40 described below may be replaced by the anode current collector layer 10. The solid-state secondary battery 100 of this embodiment will be described below as an embodiment including an anode active material layer 20 containing lithium cobalt oxide and a solid electrolyte layer 40 containing lithium borate (hereinafter also referred to as

### LBO) .

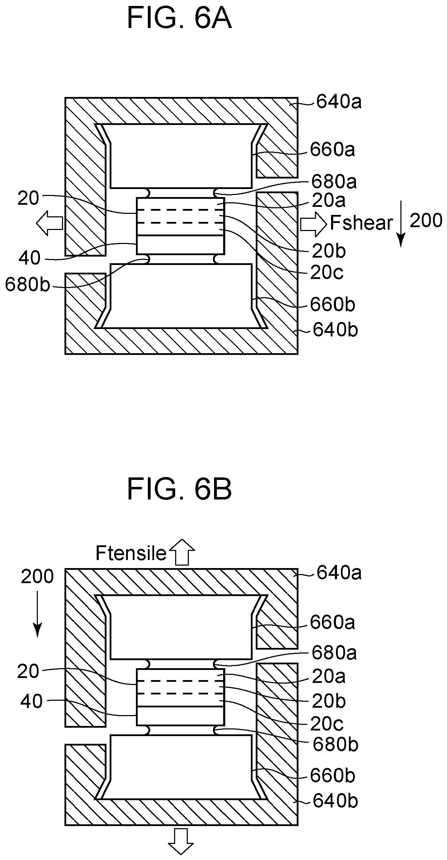

Here, holding forms of a specimen when a separation test is performed using a solid-state secondary battery 100 including the anode active material layer 20 of this embodiment will be described with reference to Figs. 6A to 6C.

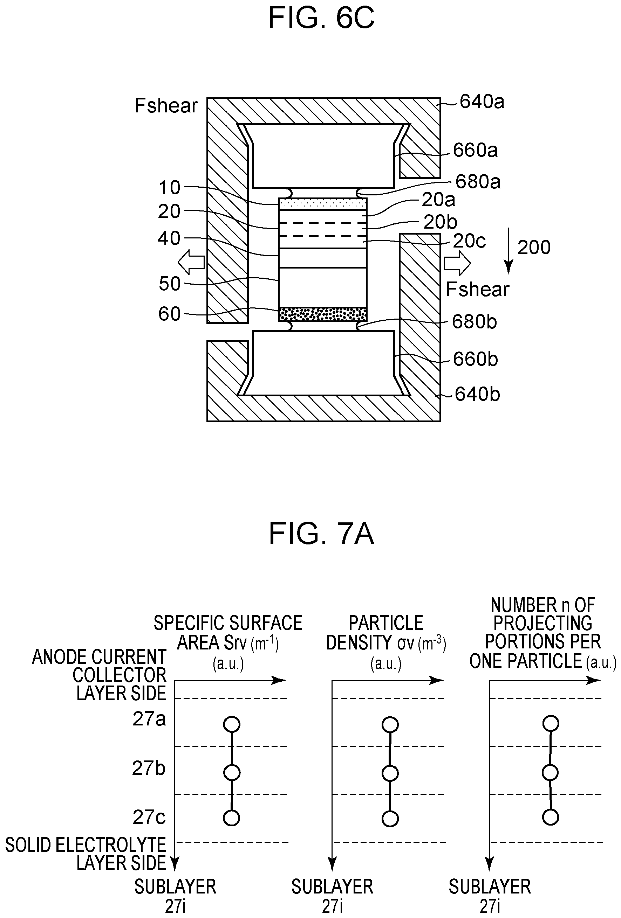

Figs. 6A and 6B are schematic views illustrating the arrangement of a shear test in the layer direction and a tensile test in the layer thickness direction 200, respectively, for a specimen prepared by taking, from the solid-state secondary battery 100, a portion in which the solid electrolyte layer 40 and the anode active material layer 20 are bound together. Fig. 6C is a schematic view illustrating the arrangement of a shear test in the layer direction using the solid-state secondary battery 100 as a specimen. The arrangement illustrated in Fig. 6C can be used for specifying or separating layers (an interface) having a weak binding force. In the specification of this application, the "binding force" may also be referred to as an adhesive force, a fixing force, or an anchoring force.

A breaking test machine not illustrated in the drawing is configured so as to be capable of fixing one of test holders 640a and 640b and applying a shear force Fshear or a tensile force Ftensile to the other. The test holders 640a and 640b illustrated in Figs. 6A to 6C and the breaking test machine not illustrated in the drawing have a structure in which the shear force Fshear or the tensile force Ftensile can be coaxially applied so that a rotational moment does not act on the specimen. As the breaking test machine, a publicly known apparatus capable of acquiring stress-strain characteristics and the precursor state of breaking can be used.

The test holders 640a and 640b are configured to be capable of holding test jigs 660a and 660b bonded to the anode active material layer 10 and the solid electrolyte layer 40, which are objects to be peeled off, with adhesive layers 680a and 680b therebetween, respectively. The adhesive layers 680a and 680b may be formed of an adhesive that ensures an adhesive force for the material of a surface of the specimen to be adhered and the material of the test jigs 660a and 660b. An epoxy adhesive or a thermosetting adhesive is selected as the adhesive. The test jigs 660a and 660b used are each a disk-like metal member having a tapered flange portion. The test jigs 660a and 660b may be made of an aluminum material.

The test holders 640a and 640b have recesses in which the test jigs 660a and 660b can be inserted, respectively, with a predetermined gap therebetween and may be made of a metal such as brass or SUS.

In the anode active material layer 20 according to the first embodiment, as illustrated in Fig. 1C, an active material layer 20c in contact with the solid electrolyte layer 40 has the minimum value of the number density σv of active material particles per unit volume, which is lower than those of the other active material layers 20b and 20a located on the side of the anode current collector layer 10. As a result, the active material layer 20c in contact with the solid electrolyte layer 40 has the minimum value of the specific surface area Srv, which is lower than those of the other sublayers. Consequently, the anode active material layer 20 has a structure in which the binding force between the solid electrolyte layer 40 and the anode active material layer 20c is weaker than the binding forces between the other anode active material layers 20c and 20b and between the active material layers 20b and 20a. As a result, the interface between the solid electrolyte layer 40 and the anode active material layer 20c serves as a stress concentration surface on which a stress is concentrated such that peeling preferentially occurs due to a tensile stress parallel to the stacking direction 200 or a shear stress parallel to the layer direction compared with other regions.

In the active material layer 20, the region where the specific surface area is the minimum value extends to be parallel to a centroid surface of the sublayer 20c. In other words, in the active material layer 20, the region where the specific surface area is the minimum value extends in a complementary direction or parallel to a plane orthogonal to the layer thickness direction. In other words, when a region of the active material layer 20 where the specific surface area is the minimum value is defined as a first region, the anode active material layer 20 has, in the layer thickness direction 200, the first region where the specific surface area per one particle of the anode active material particles 22 is lower than that in another region in the layer thickness direction.

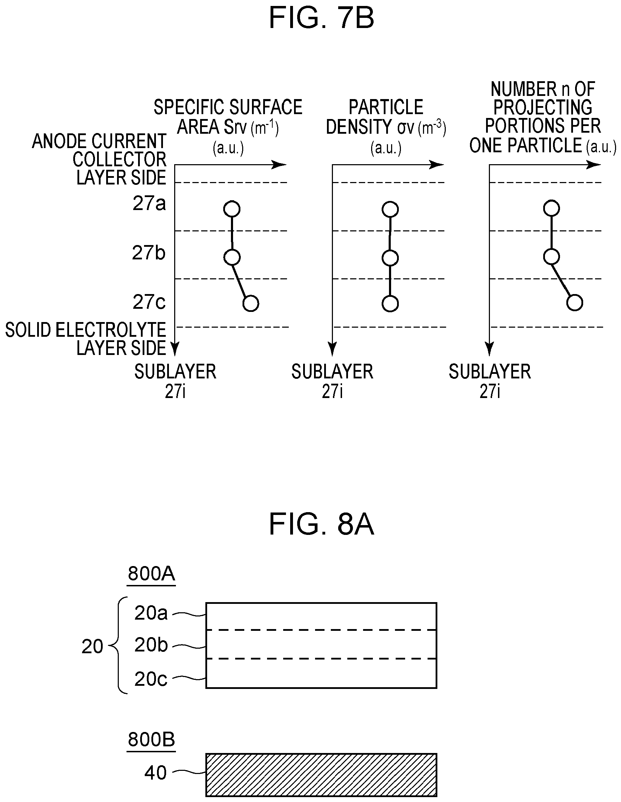

A specimen taken from the solid-state secondary battery 100 of this embodiment and including the anode active material layer 20 and the solid electrolyte layer 40 was subjected to a shear fracture test with the arrangement of the test jigs illustrated in Fig. 6A. As a result, separated specimens 800A and 800B that were peeled off from each other were obtained as illustrated in Fig. 8A. The peeled, separated specimens 800A and 800B were cleanly peeled off from each other at a layer interface between (between layers of) the sublayer 20c of the anode active material layer 20 and the solid electrolyte layer 40. In the specification of this application, a state where a pair of specimens separated as a result of a fracture test mutually have a part of the structure of the counterpart may be referred to as separation at an unintended interface, irregular separation, or irregular peeling. The solid electrolyte layer 40 and the anode active material layer 20 of the solid-state secondary battery 100 of this embodiment were separated at the layer interface between the sublayer 20c and the solid electrolyte layer 40 without occurrence of irregular separation.

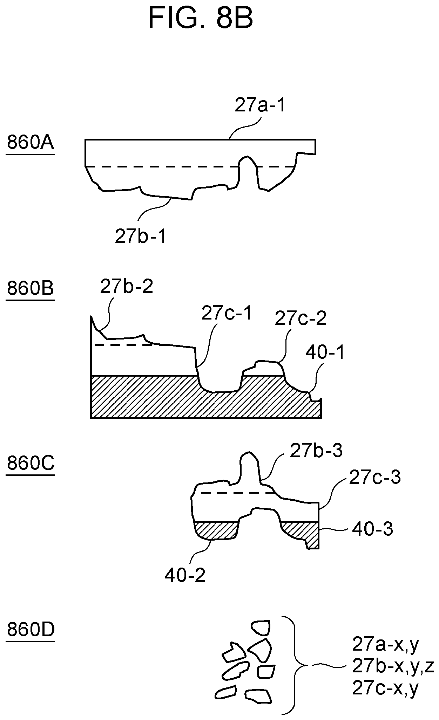

On the other hand, Fig. 7A illustrates a layer-thickness-direction distribution of the specific surface area of an active material layer of a solid-state secondary battery including an anode active material layer 27 (not illustrated) according to a first reference mode. The anode active material layer 27 has sublayers 27a to 27c in this order from the anode current collector layer side toward the solid electrolyte layer side. The solid-state secondary battery according to this reference mode has a uniform layer-thickness-direction distribution of the specific surface area of the anode active material layer. Accordingly, in the solid-state secondary battery including the anode active material layer according to this reference mode, when a tensile stress or a shear stress is applied to a test piece including the anode active material layer and the solid electrolyte layer, a region where the stress is concentrated is not aligned in a specific height region, and the stress distribution is indefinite. As a result, when a shear stress is applied to the test piece of the first reference mode to break the test piece, fissures (cracks) propagate while repeating meandering and branching to form a plurality of fragments 860A to 860D as illustrated in Fig. 8B. The fragments of the solid-state secondary battery separated by such irregular-shaped breakage include mixtures of a plurality of structural elements 40-i and 27-i, such as the fragments 860B and 860C, resulting in a decrease in recyclability. Similarly, the fragments of the solid-state secondary battery separated by such irregular-shaped breakage include fragments that are excessively small and separately require an analytical test in order to classify the fragments, such as the fragment 860D, resulting in a decrease in recyclability. The recyclability includes, for example, a reduction in the rate of recovery, an increase in the man-hour required for recovery, and an increase in the time required for recovery.

Furthermore, Fig. 7B illustrates a layer-thickness-direction distribution of the specific surface area of an active material layer of a solid-state secondary battery including an anode active material layer 27 according to a second reference mode. The anode active material layer 27 (not illustrated) has sublayers 27a to 27c in this order from the anode current collector layer side toward the solid electrolyte layer side.

Since the distribution of the specific surface area in the layer thickness direction 200 is uniform, when a tensile stress or a shear stress is applied to a test piece including the anode active material layer and the solid electrolyte layer, a region where the stress is concentrated is not concentrated in a specific region, and the stress distribution is indefinite. In the solid-state secondary battery according to this reference mode, the sublayer 20c on the solid electrolyte layer side has the maximum values in terms of the number of projecting portions and the specific surface area per one particle.

As a result, the solid electrolyte layer and the sublayer 27c of the anode current collector layer are strongly bound to each other.

On the other hand, the interface between the sublayers 27a and 27b is uniform. Accordingly, in a solid-state secondary battery including the anode active material layer according to this reference mode, when a tensile stress or a shear stress is applied to a test piece including the anode active material layer and the solid electrolyte layer as in the first reference mode, the stress distribution is indefinite. As a result, when a shear stress is applied to the test piece of the second reference mode to break the test piece, fissures propagate while repeating meandering and branching to form a plurality of fragments, resulting in a decrease in recyclability as in the test piece of the first reference mode. The solid-state secondary batteries including the anode active material layers according to the first reference mode and the second reference mode correspond to solid-state secondary batteries in the related art.

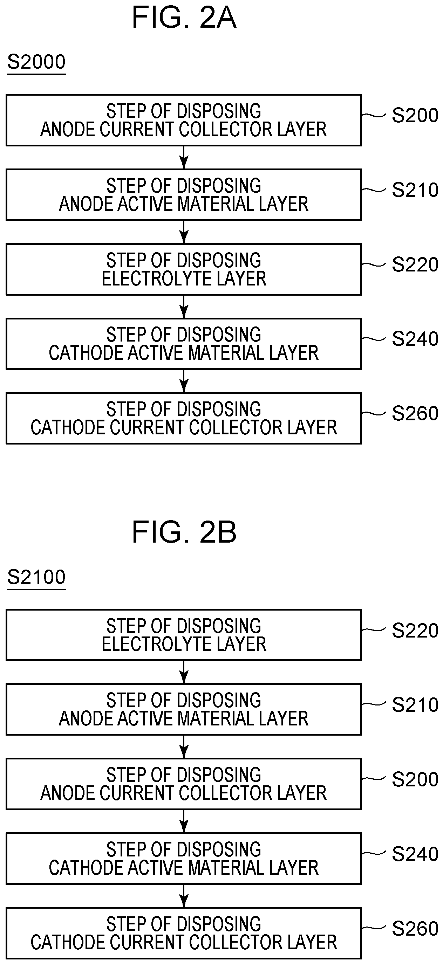

Next, a process for producing a solid-state secondary battery 100 of this embodiment will be described with reference to a flowchart in Fig. 2A. The solid-state secondary battery 100 according to the first embodiment can be produced by a production method S2000 illustrated in the flowchart in Fig. 2A. The production method S2000 includes a step S200 of disposing an anode current collector layer, a step S210 of disposing an anode active material layer, a step S220 of disposing a solid electrolyte layer, a step S240 of disposing a cathode active material layer, and a step S260 of disposing a cathode current collector layer, and these steps are performed in this order.

Fig. 2B is a flowchart illustrating a method S2100 for producing a solid-state secondary battery, the method being a modification of the production method S2000 of the first embodiment. This modification differs from the first embodiment in that the order of disposing the anode current collector layer 10, the anode active material layer 20, and the electrolyte layer 40 by stacking is reversed. That is, the order of steps of stacking an element and another adjacent element that constitute the solid-state secondary battery 100 can be exchanged or the steps can be simultaneously performed as long as the other element is not damaged.

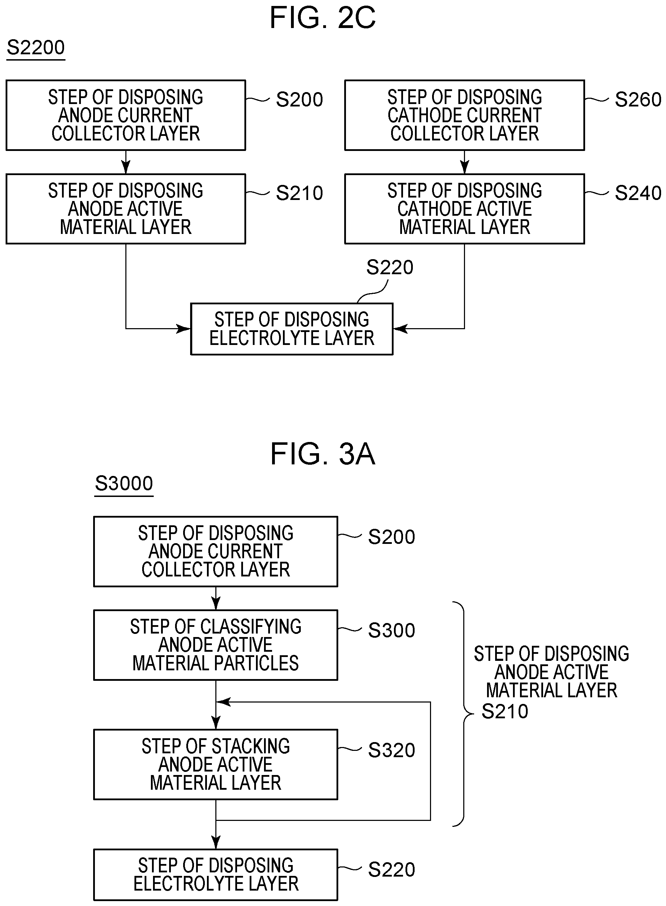

Fig. 2C is a flowchart illustrating a method S8200 for producing a secondary battery according to another modification of the production method S2000 of the first embodiment. The method S8200 for producing a secondary battery according to this modification differs from S2000 of the first embodiment and S2100 of a modification thereof in that the production of each of the anode 30 and the cathode 70 is performed in advance before stacking with the solid electrolyte layer 40.

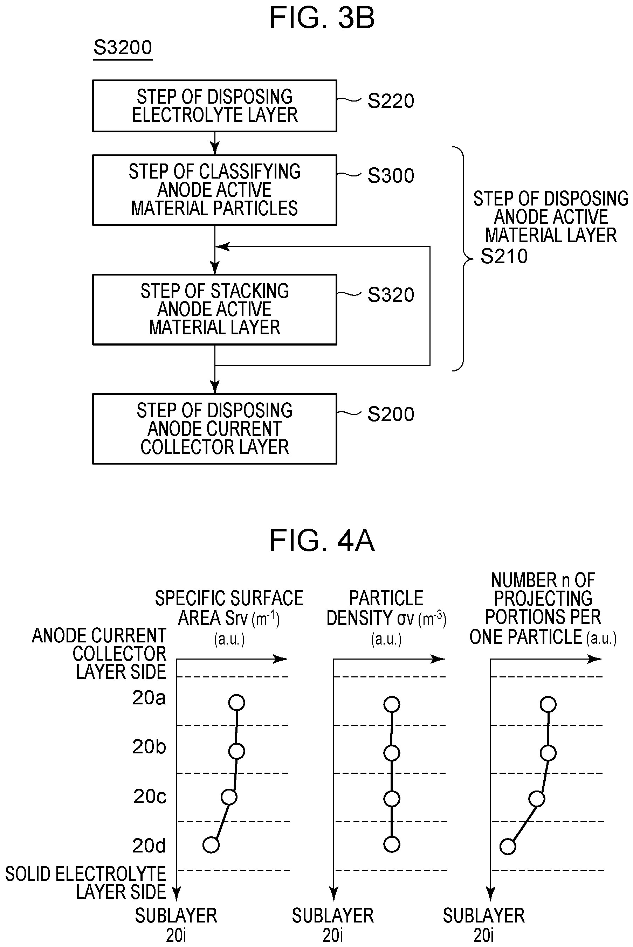

Next, the step S210 of disposing an anode active material layer 20 of this embodiment will be described with reference to flowcharts of Figs. 3A and 3B. The anode active material layer 20 according to the first embodiment can be produced by a production method S3000 illustrated in the flowchart in Fig. 3A. The production method S3000 of this embodiment includes a step S200 of disposing an anode current collector layer, a step S300 of classifying anode active material particles, a step S320 of stacking an anode active material layer, and a step S220 of disposing a solid electrolyte layer, and these steps are performed in this order.

The step S300 of classifying anode active material particles includes a step of screening an average particle size, the number of projecting portions per one particle, a variation in the shape, and the like of anode active material layers 20i (i = a, b, c -) . The step S300 of classifying anode active material particles may be performed in parallel with the step S200 of disposing an anode current collector layer.

Anode active material particles selected from the group of anode active material particles classified in the step S300 of classifying anode active material particles are used in each sublayer 20i stacked in the subsequent step of the step S320 of stacking an anode active material layer to adjust the specific surface area Svr(i) of the sublayer 20i. This step S320 can be performed by employing publicly known patterning methods and deposition methods such as an inkjet method, a sand painting method, and a mask CVD method.

In the anode active material layer 20 of this embodiment, the distribution of the specific surface area Svr in the layer thickness direction is formed by using the step of stacking the sublayers 20i. Alternatively, after the anode active material layer 20 is disposed, post-processing of reducing the specific surface area in a predetermined region may be performed. Publicly known surface modification techniques including, for example, milling, FIB processing, blasting, and buffing are applicable to the post-processing.

Fig. 3B is a flowchart illustrating a method S3100 for producing an anode active material layer 20, the method being a modification of the production method S3000 of the first embodiment. This modification differs from the first embodiment in that the order of disposing the anode current collector layer 10, the anode active material layer 20, and the electrolyte layer 40 by stacking is reversed. The steps S300 and S310 of the method S3000 for producing an anode active material layer 20 illustrated in Fig. 3A correspond to the step S210 of disposing an anode active material layer of the method S2000 for producing a solid-state secondary battery 100 illustrated in Fig. 2A. Similarly, the steps S300 and S310 of the method S3100 for producing an anode active material layer illustrated in Fig. 3B correspond to the step S210 of disposing an anode active material layer of the method S2100 for producing a solid-state secondary battery illustrated in Fig. 2A.

### (Cathode)

A publicly known method is applicable to a method for producing a cathode. As in a modification of a fourth embodiment of this application, the method for producing an anode 30 of the first embodiment may be applied to the preparation of the cathode. The cathode may be formed of particles containing a cathode active material as in the anode 30, or formed as a film of a metal such as metallic Li or In-Li.

### Solid Electrolyte

Next, examples of the solid electrolyte applied to the solid electrolyte layer 40 will be described. Examples of the solid electrolyte include oxide-based solid electrolytes, sulfide-based solid electrolytes, and complex-hydride-based solid electrolytes. Examples of the oxide-based solid electrolytes include NASICON-type compounds such as Li_{1.5}Al_{0.5}Ge_{1.5}(PO₄)₃ and Li_{1.3}Al_{0.3}Ti_{1.7}(PO₄)₃; and garnet-type compounds such as Li_{6.25}La₃Zr₂Al_{0.25}O₁₂. Examples of the oxide-based solid electrolytes further include perovskite-type compounds such as Li_{0.33}Li_{0.55}TiO₃. In addition, examples of the oxide-based solid electrolytes include LISICON-type compounds such as Li₁₄Zn(GeO₄)₄ and acid compounds such as Li₃PO₄, Li₄SiO₄, and Li₃BO₃. Specific examples of the sulfide-based solid electrolytes include Li₂S-SiS₂, LiI-Li₂S-SiS₂, LiI-Li₂S-P₂S₅, LiI-Li₂S-P₂O₅, LiI-Li₃PO₄-P₂S₅, and Li₂S-P₂S₅. The solid electrolytes may be either crystalline or amorphous and may be glass-ceramics. Note that the description of, for example, Li₂S-P₂S₅ denotes a sulfide-based solid electrolyte produced by using raw materials containing Li₂S and P₂S₅.

### Cathode Active Material

Next, examples of the cathode active material applied to the cathode active material layer 50 will be described. Examples of the cathode material include metals, metal fibers, carbon materials, oxides, nitrides, silicon, silicon compounds, tin, tin compounds, and various alloy materials. Of these, in view of the capacity density, for example, metals, oxides, carbon materials, silicon, silicon compounds, tin, and tin compounds are preferred. Examples of the metals include metallic Li and In-Li, and examples of the oxides include Li₄Ti₅O₁₂ (LTO: lithium titanate). Examples of the carbon materials include various types of natural graphite (graphite), coke, graphitizing carbon, carbon fibers, spherical carbon, various types of artificial graphite, and amorphous carbon. Examples of the silicon compounds include silicon-containing alloys, silicon-containing inorganic compounds, silicon-containing organic compounds, and solid solutions. Examples of the tin compounds include SnO_{b} (0 < b < 2), SnO₂, SnSiO₃, Ni₂Sn₄, and Mg₂Sn. The above cathode material may contain a conductive auxiliary agent. Examples of the conductive auxiliary agent include graphite such as natural graphite and artificial graphite and carbon black such as acetylene black, ketjenblack, channel black, furnace black, lamp black, and thermal black. Examples of the conductive auxiliary agent include conductive fibers such as carbon fibers, carbon nanotubes, and metal fibers, fluorinated carbon, metal powders such as an aluminum powder, conductive whiskers such as zinc oxide, conductive metal oxides such as titanium oxide, and organic conductive materials such as phenylene dielectrics.

### Current Collector Layer

As the current collectors applied to the current collector layers 10 and 60, conductive members containing a metal such as SUS, aluminum, or copper are used. The metal is used in the form of a metal foil, a freestanding film, or a thin-film supported on a base material.

### <Second Embodiment>

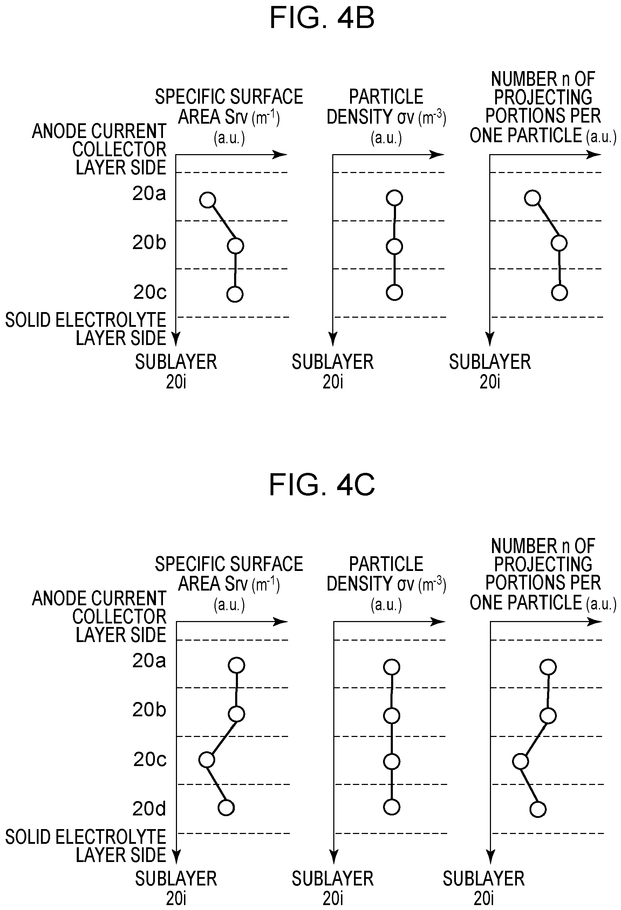

Next, a solid-state secondary battery 100 including an anode active material layer 20 according to a second embodiment will be described with reference to Fig. 4A. The anode active material layer 20 of this embodiment differs from the anode active material layer 20 of the first embodiment in that the specific surface area Srv is adjusted in each sublayer by changing the number n of projecting portions per one particle and that the anode active material layer 20 has four sublayers 20a to 20d. The anode active material layer 20 of this embodiment differs from the anode active material layer 20 of the first embodiment in that the specific surface area Svr gradually decreases over the sublayers 20b, 20c, and 20d. Also in the solid-state secondary battery 100 including the anode active material layer 20 according to this embodiment, the binding force between the sublayer 20d of the anode active material layer 20 and the solid electrolyte layer 40 is weaker than the binding force between the other sublayers of the anode active material layer 20. Therefore, in the anode active material layer 20 according to this embodiment, the interface with the solid electrolyte layer 40 serves as a stress concentration surface for a shear force in the layer direction and a tensile force in the layer thickness direction as in the anode active material layer 20 of the first embodiment. In the solid-state secondary battery 100 including the anode active material layer 20 of this embodiment, recyclability of the raw material of the anode active material and the solid electrolyte material is ensured as in the first embodiment.

### <Third Embodiment>

Next, a solid-state secondary battery 100 including an anode active material layer 20 according to a third embodiment will be described with reference to Fig. 4B. The anode active material layer 20 of this embodiment differs from the first embodiment in that the specific surface area Srv is adjusted in each sublayer by changing the number n of projecting portions per one particle and that the specific surface area Svr of a sublayer 20a located on the side of the anode current collector layer 10 has the minimum value. In the solid-state secondary battery 100 including the anode active material layer 20 according to this embodiment, the binding force between the sublayer 20a of the anode active material layer 20 and the anode current collector layer 10 is weaker than the binding force between the other sublayers of the anode active material layer 20. Therefore, in the anode active material layer 20 according to this embodiment, the interface with the anode current collector layer 10 serves as a stress concentration surface for a shear force in the layer direction and a tensile force in the layer thickness direction. In the solid-state secondary battery 100 including the anode active material layer 20 of this embodiment, recyclability of the raw material of the anode active material and the anode current collector material is ensured.

### <Fourth Embodiment>

Next, a solid-state secondary battery 100 including an anode active material layer 20 according to a fourth embodiment will be described with reference to Fig. 4A. The anode active material layer 20 of this embodiment differs from the anode active material layer 20 of the second embodiment in that, in a sublayer 20c, the specific surface area Srv has the minimum value, and in a sublayer 20d, the second lowest specific surface area Sv is exhibited. In the solid-state secondary battery 100 including the anode active material layer 20 according to this embodiment, the binding force between the sublayers 20c and 20d of the anode active material layer 20 is weaker than the binding force between the other sublayers of the anode active material layer 20 and the binding force between the sublayer 20d and the solid electrolyte layer 40. Therefore, in the anode active material layer 20 according to this embodiment, the interface between the sublayers 20c and 20d serves as a stress concentration surface for a shear force in the layer direction and a tensile force in the layer thickness direction. The solid-state secondary battery 100 including the anode active material layer 20 of this embodiment differs from the first and second reference modes in that an anode active material layer including the sublayers 20a to 20c of the anode active material layer 20 is easily separated, and recyclability of the raw material of the anode active material is ensured. In the solid-state secondary battery 100 including the anode active material layer 20 of this embodiment, since the fracture surface, i.e., the cleaved surface formed by application of a shear force or a tensile force is a clear separation surface, it is expected that the rate of recovery of the solid electrolyte layer 40 is also improved compared with the first and second reference modes.

### <Fifth Embodiment>

Next, a solid-state secondary battery 100 including an anode active material layer 20 according to a fifth embodiment will be described with reference to Fig. 5A. The anode active material layer 20 of this embodiment differs from the anode active material layer 20 of the first embodiment in that the anode active material layer 20 of this embodiment has an intra-anode active material 24 coexisting with anode active material particles 22. The mixing ratio of the anode active material particles 22 and the intra-anode active material 24 in each of the sublayers 20a to 20c can be adjusted by the step S300 of classifying anode active material particles and the step S320 of stacking an anode active material layer in Fig. 3B. For the sake of increasing the ion conductivity between the anode active material layer 20 and the solid electrolyte layer 40, the intra-anode electrolyte 24 is provided in the anode active material layer 20 so as to have portions in contact with the anode active material particles 22. The sublayers 20a, 20b, and 20c of the anode active material layer may form a distribution in the layer thickness direction in terms of not only the mixing ratio (volume fraction) of the active material particles 22 and the intra-anode electrolyte 24 but also a conductive auxiliary agent not illustrated in the drawing, the void ratio (porosity), and the like.

The anode active material particles 22 and the intra-anode electrolyte 24 may have different particle sizes and particle size distributions. In addition, the intra-anode electrolyte 24 and electrolyte particles that are contained in the solid electrolyte layer 40 and that are not illustrated in the drawing may have different particle sizes, particle size distributions, compositions, and the like.

### <Sixth Embodiment>

Next, a solid-state secondary battery 100 including an anode active material layer 20 according to a sixth embodiment will be described with reference to Fig. 5B. The anode active material layer 20 of this embodiment differs from the anode active material layer 20 of the first embodiment in that the anode active material layer 20 of this embodiment has an intra-anode active material 24 coexisting with anode active material particles 22 and that the intra-anode active material 24 and anode active material particles 22 are disposed in the layer in a predetermined arrangement pattern. The anode active material layer 20 of this embodiment differs from the anode active material layer 20 of the fifth embodiment in that the intra-anode active material 24 and anode active material particles 22 form a predetermined arrangement pattern and that the phases of patterns match each other in the sublayers 20a to 20c.

The present invention is not limited to the above-described embodiments, and various changes and modifications may be made without departing from the spirit and scope of the present invention. Accordingly, in order to make the scope of the present invention public, the following claims are appended.

This application claims the benefit of Japanese Patent Application No. 2020-203467 filed December 8, 2020, which is hereby incorporated by reference herein in its entirety.

## Claims

1. A solid-state secondary battery comprising an active material layer in which a plurality of active material particles are deposited in a layer thickness direction, the active material particles having a particle portion and a plurality of projecting portions that project from the particle portion in a plurality of directions; an electrolyte layer that performs transfer of active material ions with the active material particles; and a current collector layer that performs transfer of electrons with the active material particles,
wherein the active material layer has, in the layer thickness direction, a first region where a specific surface area of the active material particles is lower than that in another region in the layer thickness direction.

2. The solid-state secondary battery according to Claim 1, wherein the first region extends in a layer direction of the active material layer.

3. The solid-state secondary battery according to Claim 1 or 2, wherein the first region includes a region where at least one of a tensile stress in the layer thickness direction and a shear stress in a layer direction is concentrated compared with another region in the layer thickness direction.

4. The solid-state secondary battery according to any one of Claims 1 to 3, wherein the first region includes a position at which the active material particles are in contact with the electrolyte layer or the current collector layer.

5. The solid-state secondary battery according to any one of Claims 1 to 4, wherein the active material layer has, in the layer thickness direction, a first region where a specific surface area per one particle of the active material particles is
lower than that in another region in the layer thickness direction.

6. The solid-state secondary battery according to any one of Claims 1 to 5, wherein the active material particles contain at least one of lithium cobalt oxide and cobalt lithium phosphate.

7. The solid-state secondary battery according to any one of Claims 1 to 6, wherein the electrolyte layer is a solid electrolyte layer.

8. The solid-state secondary battery according to Claim 7, wherein the solid electrolyte contains an oxide-based solid electrolyte containing a metal oxide.
